# EUROPEAN PATENT SPECIFICATION

(11) **EP 1 815 988 B1**
(45) Date of publication and mention of the grant of the patent: **21.03.2012**
(21) Application number: 05807002.0
(22) Date of filing: 15.11.2005
(51) Int. Cl.: C09D 11/10, B41J 11/00

(54) **INKJET RECORDING DEVICE**
TINTENSTRAHLAUFZEICHNUNGSVORRICHTUNG
DISPOSITIF D'ENREGISTREMENT À JET D'ENCRE

(30) Priority: 22.11.2004 JP 2004337630
(43) Date of publication of application: 08.08.2007
(73) Proprietor: Konica Minolta Medical & Graphic, Inc., Hino-shi, Tokyo 191-8511 (JP)
(72) Inventor: YOKOYAMA, Takeshi Konica Minolta Medical & Graphic, Tokyo 1928505 (JP)
(74) Representative: Roberts, Mark Peter
(86) International application number: PCT/JP2005/020909
(87) International publication number: WO 2006/054534

(56) References cited:
- EP-A1- 1 439 071
- JP-A- 2004 188 929
- JP-A- 2004 188 929
- US-A1- 2004 041 892
- US-A1- 2005 018 026

## Description

The present invention relates to an inkjet recording apparatus that records an image on a recording medium.

As apparatuses that record images even on recording mediums which absorb little ink, photo-curing inkjet type inkjet recording apparatuses are used. A photo-curing inkjet type recording apparatus jets photo-curable ink from a recording head/heads onto the surface of a recording medium such that the ink lands on the recording medium, and then irradiates light from an irradiation device/devices, such as a mercury lamp/lamps, so as to fix the ink on the surface of the recording medium (for example, refer to Patent Documents 1 to 3).

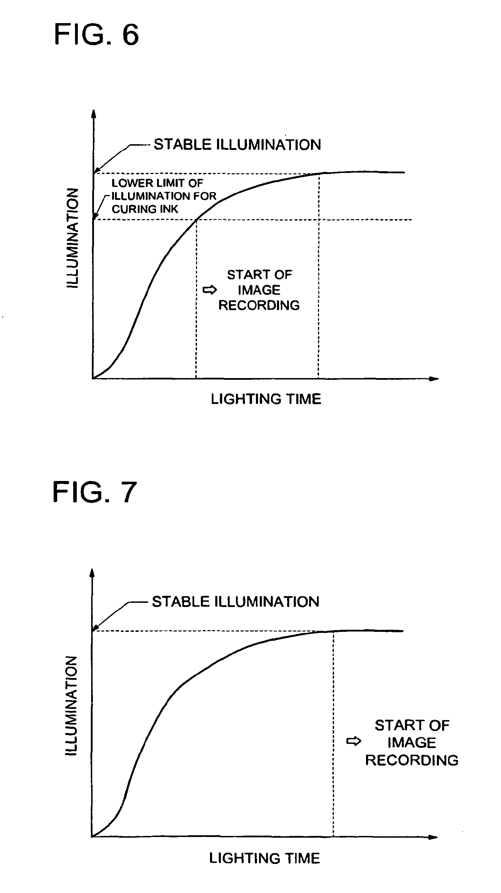

However, as the illumination is unstable just after a start of lighting of an irradiation device, it is possible that ink is not cured even when image recording is stared. Accordingly, in a viewpoint of curing ink securely, an inkjet recording apparatus in a prior art does not start image recording until the illumination reaches a stable illumination after a start of lighting, as shown in Fig. 7.
- Patent Document 1:: Japanese Patent Application Publication TOKKAI No. 2002-137375
- Patent Document 2:: Japanese Patent Application Publication TOKKAI No. 2003-145725
- Patent Document 3:: Japanese Patent Application Publication TOKKAI No. 2004-1326

JP 2004-188929 A discloses an inkjet recording device that comprises of light sources for generating light to cure ink discharged from an inkjet head. A light source scanning means is set, thereby enabling measurement of the quantity of light sources.

However, in general, illumination required for curing ink, namely, the lower limit of illumination for curing, is lower than the stable illumination of an irradiation device. Accordingly, if image recording is not performed until the illumination reaches the stable illumination, start of image recording is wastefully delayed, resulting in inefficiency.

An aim of the present invention is to provide an inkjet recording apparatus that improves the efficiency of image recording.

According to the present invention, there is provided an inkjet recording apparatus as defined in the independent claim.

According to the present invention, since a recording head is in a state that allows the recording head to perform image recording when the illumination measured by the illumination measuring device is higher than or equal to the lower limit of illumination for curing ink, image recording starts earlier, compared with a case of a prior art where a recording head does not turn into a state that allows the recording head to perform image recording until the illumination reaches a stable illumination. Thus, the efficiency of image recording can be improved.

Further, since light that causes an illumination higher than or equal to the lower limit of illumination for curing is irradiated onto ink having landed on a recording medium, the ink can be securely cured. Accordingly, blurring by uncured ink or the like can be prevented, and thus it is possible to prevent deterioration of image quality, compared with cases of a prior art.

According to the present invention, since a recording head turns into a state that allows the recording head to jet ink when two measured illuminations measured by an illumination measuring device are respectively higher than or equal to a lower limit of illumination for curing, it is possible to prevent a start of image recording when illumination by an irradiation device is unstably higher than or equal to a lower limit of illumination for curing, which may occur, for example, just after a start of lighting or switching the output. Thus, it is possible to control the illumination caused by light that is irradiated onto ink on a recording medium to be securely higher than or equal to the lower limit of illumination for curing. Accordingly, ink can be securely cured.

The inkjet recording apparatus may include a plurality of said irradiation devices, wherein the controller controls the recording head to be in a state that allows the recording head to jet ink, when two illuminations measured by the illumination measuring device at a predetermined time interval are respectively higher than or equal to the lower limit of illumination for curing, with respect to each of the irradiation devices.

According to the above structure, since a recording head turns into a state that allows the recording head to jet ink, when two measured illuminations measured by an illumination measuring device are respectively higher than or equal to a lower limit of illumination for curing, with respect to each of the irradiation devices, it is possible to prevent a start of image recording when illumination by an irradiation device is unstably higher than or equal to a lower limit of illumination for curing, which may occur, for example, just after a start of lighting or switching the output. Thus, it is possible to control the illumination by light that is irradiated onto ink on a recording medium to be securely higher than or equal to a lower limit of illumination for curing. Accordingly, ink can be securely cured.

The inkjet recording apparatus may include at least one of:
an input device via which an operator inputs a kind of a recording medium;
a first temperature measuring device that measures a temperature of a recording medium;
a second temperature measuring device that measures an ambient temperature;
a humidity measuring device that measures a humidity; and
a calculating section that calculates resolution of an output image,
wherein the controller calculates the lower limit of illumination for curing, based on at least one of the kind of a recording medium, temperature of the recording medium, ambient temperature, humidity and resolution of an output image.

Herein, the lower limit of illumination for curing ink changes depending on the kind of the recording medium, temperature of the recording medium, ambient temperature, humidity, resolution of the output image, and the like. For example, as the water containing rate is greater, it is more difficult to cure ink, and accordingly, the lower limit of illumination for curing is higher. Further, as the temperature of the recording medium and ambient temperature are higher, ink is warmed more in advance prior to irradiation of light, and accordingly the lower limit of illumination for curing is lower. Still further, as the humidity is higher, it is more difficult that the solvent of ink evaporates, and accordingly the lower limit of illumination for curing is higher. Yet further, as the resolution of an output image is higher, the ink amount per dot is smaller, and accordingly the ratio of the surface area to the volume of ink is greater. This results in that water in the atmosphere gets into ink more easily, and ink is more difficult to be cured, and accordingly the lower limit of illumination for curing becomes higher.

According to the above structure, since the controller calculates the lower limit of illumination for curing, based on at least one of the kind of a recording medium, temperature of the recording medium, ambient temperature, humidity and resolution of an output image, it is possible to calculate an accurate lower limit of illumination for curing, regardless of changes in the kind and temperature of the recording medium, humidity, and resolution. Thus, it is possible to securely cure ink.

The first temperature measuring device may measure a temperature of a platen that supports the recording medium, for the temperature of the recording medium.

According to the above structure, since the first temperature measuring device measures the temperature of a platen that supports the recording medium, for the temperature of the recording medium, it is possible to prevent occurrence of a failure of the first temperature measuring device, which could be caused by friction with the conveyed recording medium, compared with a case of directly measuring the temperature of a recording medium.

The inkjet recording apparatus may include a storage section that stores a table indicating a relationship between the lower limit of illumination for curing ink and at least one of the kind of a recording medium, temperature of the recording medium, ambient temperature, humidity and resolution of an output image,
wherein the controller calculates the lower limit of illumination for curing ink, using the table.

According to the above structure, since the controller calculates the lower limit of illumination for curing, using the table, it is possible to calculate the lower limit of illumination for curing more easily, compared with a case of calculating it, using a mathematical expression or the like.

The recording head may jet an ink of a cation-polymerization type.

According to the above structure, the same effect as above can be obtained.

The controller may control the recording head to be in a state that prohibits the recording head to jet ink, when at least one of the two illuminations measured by the illumination measuring device is lower than the lower limit of illumination for curing ink.

According to the above structure, it is possible to prevent that the recording head jets ink in a state where light irradiated by the irradiation device causes an illumination that is lower than the lower limit of illumination for curing ink and the ink flows on the recording medium without being cured.

Optionally, when at least one of the two illuminations measured by the illumination measuring device is lower than the lower limit of illumination for curing ink, for a time longer than or equal to a predetermined time period, the controller performs an alarm function.

According to the above structure, it is possible to prevent leaving a state where image recording is not performed or ink is not jetted because light irradiated from the irradiation device causes an illumination that is lower than the lower limit of illumination for curing while an operator is unaware of the state.

Optionally, during when jetted ink is irradiated, the controller turns the recording head into a state that prohibits the recording head to jet ink when at least one of the two illuminations measured by the illumination measuring device has become lower than the lower limit of illumination for curing ink, and performs an alarm function.

According to the above structure, it is possible to automatically stop image recording or jetting of ink immediately when illumination by light irradiated from the irradiation device decreases and becomes lower than the lower limit of illumination for curing ink during image recording and the state changes such that ink is not cured, and to alarm the operator of the fact.

According to the structure of the independent claim, image recording starts earlier than a case of a prior art where a recording head does not turn into a state that allows the recording head to jet ink until the illumination reaches a stable illumination. Accordingly, the efficiency of image recording can be improved.

Furthermore, it is possible to securely cure ink because the illumination by light irradiated from the irradiation device onto ink on the recording medium is securely made higher than or equal to the lower limit of illumination for curing.

According to the structure of claim 3, it is possible to calculate an accurate lower limit of illumination for curing regardless of a change in the kind and temperature of a recording medium, humidity, and resolution. Accordingly, ink can be securely cured.

According to the structure of claim 4, it is possible to prevent occurrence of a failure of the first temperature measuring device, which could be caused by friction with the conveyed recording medium, compared with a case of directly measuring the temperature of the recording medium.

According to the structure of claim 5, it is possible to easily calculate the lower limit of illumination for curing.

According to the structure of claim 7, it is possible to prevent that the recording head jets ink in a state where light irradiated by the irradiation device causes an illumination that is lower than the lower limit of illumination for curing ink and the ink flows on the recording medium without being cured.

According to the structure of claim 8 or 9, it is possible to prevent leaving a state where image recording is not performed or ink is not jetted because light irradiated from the irradiation device causes illumination that is lower than the lower limit of illumination for curing ink while an operator is unaware of the state, or to prevent that jetting of ink continues and ink flows when illumination by light irradiated from the irradiation device has become lower than the lowest limit of illumination for curing ink during image recording and the state has changed such that ink is not cured. The operator is alarmed of the fact.
Fig. 1 is a front view of a schematic structure of an inkjet recording apparatus in accordance with the invention;
Fig. 2 is a diagram showing the lower limit of illumination for curing ink;
Fig. 3 is a block diagram showing a schematic structure of the inkjet recording apparatus in accordance with the invention;
Fig. 4 is a diagram showing an example of a table regarding the lower limit of illumination for curing ink;
Fig. 5 is a diagram showing changes in illumination after a start of lighting of an irradiation device;
Fig. 6 is a diagram showing image recording start timing of the inkjet recording apparatus in accordance with the invention; and
Fig. 7 is a diagram showing image recording start timing of an inkjet recording apparatus in a prior art.

### DESCRIPTION OF THE REFERENCE SYMBOLS

- 1: inkjet recording apparatus
- 3a to 3d: recording head
- 4: irradiation device
- 8: controller
- 10: platen
- 12: input device
- 13: medium temperature measuring device (first temperature measuring device)
- 70: illumination measuring device
- 71: ambient temperature measuring device (second temperature measuring device)
- 72: humidity measuring device
- 80: storage section
- 81: table
- 82: calculating section
- K: recording mediu8m

### DESCRIPTION OF THE PREFERRED EMBODIMENT

An embodiment in accordance with the invention will be described below, referring to the drawings. Herein, the present embodiment will be described for a case where the inkjet recording apparatus is a serial head type.

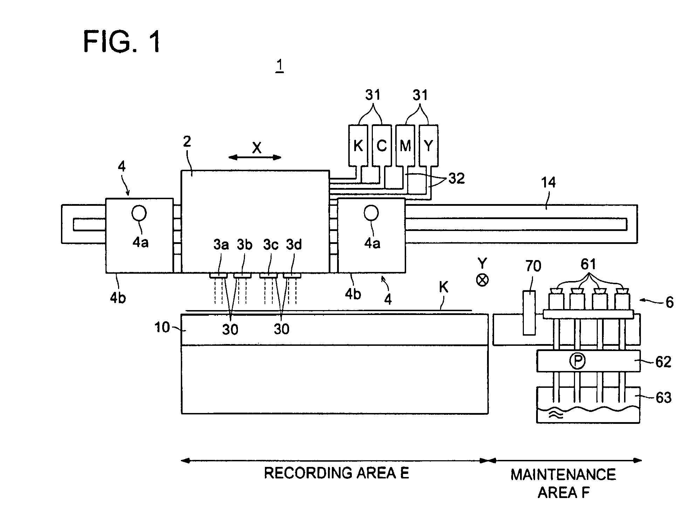

Fig. 1 is a side view showing a schematic structure of an inkjet recording apparatus in accordance with the present invention.

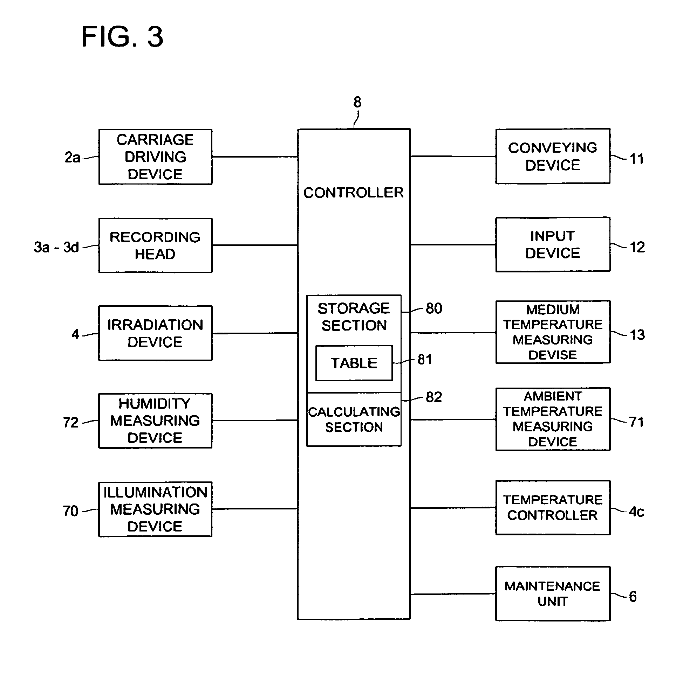

As shown in the figure, the inkjet recording apparatus 1 is provided with a platen 10 that is arranged in a recording area E and supports a recording medium K planarly on the back side. The recording medium K supported by the platen 10 is conveyed by a conveying device 11 (refer to Fig, 3), in conveying direction Y (the front and back direction with respect to Fig. 1). An operator can input the kind of a recording medium K supported by the platen 10 via an input device 12 (refer to Fig. 3). Herein, the kind of the recording medium K is a factor that changes the lower limit of illumination for curing ink. For example, the higher the water containing ratio of the recording medium K, the more difficult for ink to be cured on the surface of the recording medium K, and accordingly, the higher the lower limit of illumination for curing ink. Further, with a recording medium K, such as paper, that contains calcium carbonate, the lower limit of illumination for curing is higher because polymerization is inhibited.

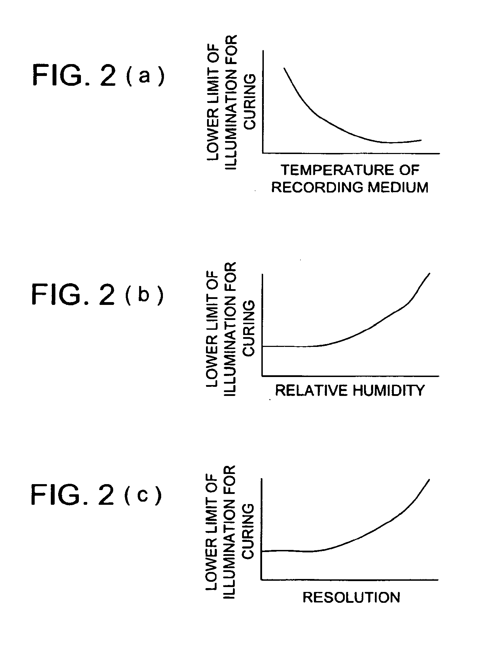

A medium temperature measuring device 13 (refer to Fig 3) as a first temperature measuring device in accordance with the present invention is provided on the top surface of the platen 10. The medium temperature measuring device 13 measures the temperature of the recording medium K, and measures the temperature of the top surface of the platen 10 for the temperature of the recording medium K. Herein, as shown in Fig. 2a, the temperature of the recoding medium K is a factor that changes the lower limit of illumination for curing ink. As this temperature is higher, ink is warmed more in advance prior to irradiation by light from an irradiation device 4, and accordingly, the lower limit of illumination for curing ink is lower. As the medium temperature measuring device 13, a known temperature sensor in a prior art can be employed.

A carriage rail 14 is arranged above the platen 10, extending in the scanning direction X. A carriage 2 is provided on the carriage rail 14.

The carriage 2 is driven by a carriage driving device 2a (refer to Fig. 3) to be moved in the scanning direction X from the recording area E to the maintenance area F. A plurality of recording heads 3a to 3d are mounted on the carriage 2, aligned along the scanning direction X.

The recording heads 3a to 3d jet photo-curable ink, UV curable-ink in the present embodiment, from a plurality of ink jetting openings (not shown) arranged through the jetting faces 30 onto the recording medium K. Each of the inkjet openings is arranged such as to individually jet ink as liquid droplets with operation of a piezo-element or heating element, for example. In the present embodiment, the recording head 3a jets black (K) ink, recording head 3b jets cyan (C) ink, recording head 3c jets magenta (M) ink, and recording head 3d jets yellow (Y) ink.

The recording heads 3a to 3d are respectively connected to ink tanks 31 storing ink in corresponding colors through ink supply tubes 32. These ink tanks 31 and ink supply tubes 32 supply ink to the recording heads 3a to 3d.

Further, irradiation devices 4, 4 are arranged on the both ends of the carriage 2 in the scanning direction X so as to be moved in the scanning direction X with the carriage 2.

Each irradiation device 4 is provided with a UV light source 4a inside a cover member 4b in a recessed shape being open downward.

Each UV light source 4a radially irradiates UV light. As the UV light source 4a, it is possible to employ, for example, a high-pressure mercury lamp, low-pressure mercury lamp, metal-halide lamp, black light, hot-cathode tube, cold-cathode tube, LED (Light Emitting Diode), electrodeless lamp, excimer lamp, etc.

The metal cap section (not shown) of the UV light source 4a is connected with a temperature controller 4c (refer to Fig. 3).

When the irradiation devices 4, 4 have reached a stable illumination state, the controller 4c maintains the metal cap sections at the temperature for the state of stable illumination, for example, 50 to 60 °C. Further, at a start of lighting of the irradiation devices 4,4 and at the time of switching to a higher illumination, the temperature controller 4c maintains the metal cap sections at a temperature 10 to 20 °C higher than the temperature for the state of stable illumination.

Still further, as shown in Fig. 1, a maintenance unit 6 is arranged in the maintenance area F beside the platen 10.

The maintenance unit 6 performs maintenance of the recording heads 3a to 3d, and shields the jetting faces 30 of the recording heads 3a to 3d in a waiting state from UV light. The maintenance unit 6 is provided with cap members 61 which are movable up and down.

The cap members 61 cover the jetting faces 30 of the recording heads 3a to 3d, and are disposed corresponding to the array of the recording heads 3a to 3d so as to be able to cover the jetting faces 30 of the four recording heads 4a to 4d at the same time.

The cap members 61 are communicated with a waste-ink tank 63 through a suction pump 62. The suction pump 62 includes a cylinder pump, tube pump, or the like, and generates a suction force to suck ink in the recording heads 3a to 3d from the ink jetting openings (not shown) along with foreign matter in a state where the cap members 61 cover the jetting faces 30.

Beside the cap members 61, there are arranged an illumination measuring device 70, ambient temperature measuring device 71 (refer to Fig. 3), and humidity measuring device 72 (refer to Fig. 3).

The illumination measuring device 70 measures the illumination by light irradiated from the irradiation device 4.

The ambient temperature measuring device 71 is the second temperature measuring device in accordance with the invention, and measures the ambient temperature inside the inkjet recording apparatus 1. Herein, the ambient temperature is a factor that changes the lower limit of illumination for curing ink. As the temperature of the ambient temperature is higher, ink is warmed more in advance prior to irradiation of light, and accordingly the lower limit of illumination for curing is lower.

The humidity measuring device 72 measures the relative humidity inside the inkjet recording apparatus 1. Herein, the relative humidity is a factor that changes the lower limit of illumination for curing ink, as shown in Fig. 2b. The higher the relative humidity, the more difficult for the solvent of ink to evaporate, and accordingly the lower limit of illumination for curing ink is higher.

For the illumination measuring device 70, ambient temperature measuring device 71 and humidity measuring device 72, known sensors in a prior art can be employed.

As shown in Fig. 3, a controller 8 is connected to the above-described carriage driving device 2a, conveying device 11, input device 12, recording heads 3a to 3d, irradiation device 4, temperature controller 4c, maintenance unit 6, medium temperature measuring device 13, ambient temperature measuring device, humidity measuring device 72, illumination measuring device 70, and the like.

The controller 8 is constituted with a CPU, RAM, ROM and the like, which are not shown, and has a storage section 80 and calculating section 82.

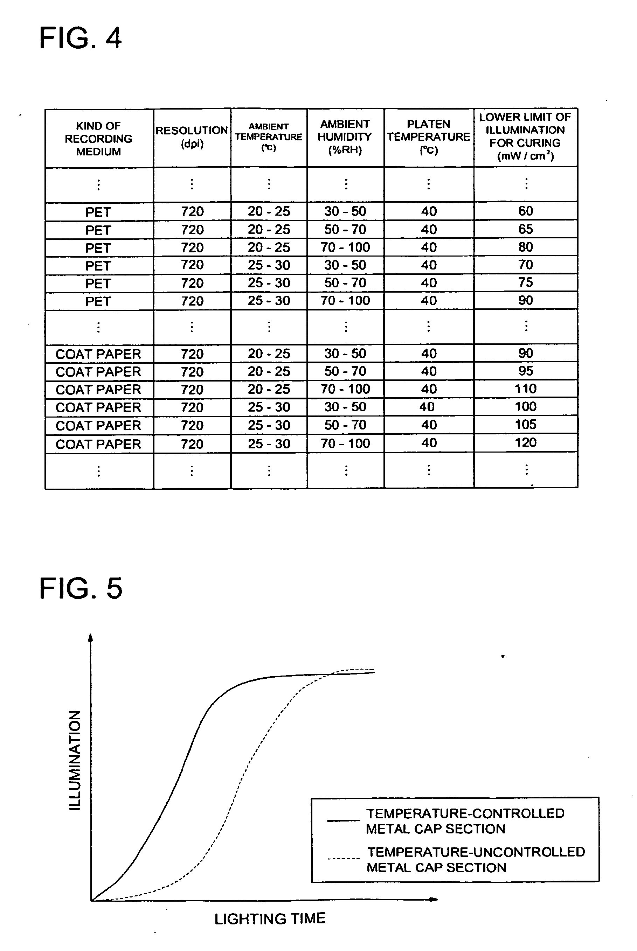

The storage diction 80 stores a table 81 (refer to Fig. 4) that indicates the relationships between the lower limit of illumination for curing that allows curing of ink, and the kind of a recording medium K, temperature of the recording medium K, ambient temperature, relative humidity, and resolution of an output image.

The calculating section 82 performs computation to calculate the resolution of an output image and the like. Herein, as shown in Fig. 2c, the resolution of an output image is a factor that changes the lower limit of illumination for curing ink. The higher the resolution of an output image, the smaller the ink amount per dot and the greater the ratio of the surface area to the volume of ink. Consequently, the water contained in the atmosphere enters ink more easily, and it becomes more difficult for the ink to be cured, which makes the lower limit of illumination for curing higher.

The calculating section 82 calculates the lower limit of illumination for curing ink, based on information transmitted from the input device 12, measured results by the medium temperature measuring devise 13, ambient temperature measuring device 71 and humidity measuring device 72, and the resolution of an output image. More concretely, the calculating section 82 calculates the lower limit of illumination for curing by the use of the table 81 in the storage section 80.

The above described controller 8 controls respective sections of the inkjet recording apparatus 1.

Specifically, the controller 8 controls the carriage driving device 2a to move the recording heads 3a to 3d and the irradiation devices 4, 4 in the scanning direction x. Further, the controller 8 controls the conveying device 11 to intermittently convey the recording medium K. Still further, the controller 8 controls the maintenance unit 6 to perform maintenance of the recording heads 3a to 3d.

Yet further, the controller 8 controls the recording heads 3a to 3d to jet ink. More specifically, the controller 8 controls the recording heads 3a to 3d to turn into the state that allows the recording heads 3a to 3d to perform image recording such as to jet ink, based on image data, when two illuminations, which are measured by the illumination measuring device 70 at a predetermined time interval after a start of lighting of the irradiation devices 4,4, are respectively higher than or equal to the lower limit of illumination for curing ink.

Further, the controller 8 controls the irradiation devices 4,4 to irradiate UV light to cure ink on the surface of the recording medium K.

Now, "ink" used in the present embodiment will be described.

The ink used in the present embodiment is UV-curable ink that is cured by irradiation of UV light, and contains at least a polymerizable compound (which may be a known polymerizable compound), photo-initiator and coloring material, as major components.

UV curable inks, as described above, can be briefly categorized, in terms of polymerizable compounds, into radical-polymerization inks containing a radical-polymerizable compound and cation-polymerization inks containing a cation-polymerizable compound, both of which can be applied as ink to be used in the present embodiment. However, cation-curable inks are less or not inhibited by oxygen from polymerization, and accordingly more sensitive to UV light. Consequently, cation-curable inks are excellent in functionality and versatility.

Now, "recording medium" used in the present embodiment will be described.

For the recording medium used in the present embodiment, it is possible to employ a medium made of a material, such as a plain paper applied to a common inkjet recording apparatus, recycled paper, glossy paper and other various papers, various fabrics, various nonwoven fabrics, resins, metals, glasses, foamed films and the like. As the form of the recording medium, a roll form, cut-sheet form, plate form, and the like can be applied.

Further, for the recording medium used in the present embodiment, it is possible to apply known opaque recording mediums including various papers of which surface is coated with a resin, films containing a pigment, foamed films, and the like.

Now, operations of the inkjet recording apparatus 1 at the time of start-up and at the time of termination of later-described maintenance will be described.

The irradiation devices 4,4 start lighting and the temperature controller 4c maintains the temperature of the metal cap of each UV light source 4a higher than the temperature for the state of stable irradiation. In this way, as shown in Fig. 5, the increasing rate of the illumination by the irradiation devices 4,4 is greater, compared with a case where the temperature of the metal caps is not controlled.

Next, the carriage 2 is reciprocally moved such that the irradiation devices 4,4 alternately face the illumination measuring device 70 twice respectively, and the illumination measuring device 70 facing the irradiation devices 4 measures the illumination. Thus, illuminations by the irradiation devices 4,4 are measured twice for each at a predetermined interval.

The medium temperature measuring device 13, ambient temperature measuring device 71 and humidity measuring device 72 measure the temperatures and relative humidity.

Further, when the operator inputs a kind of a recording medium via the input device 12, the information is transmitted from the input device 12 to the controller 8.

Still further, the controller 8 calculates the resolution of an output image, based on image data.

Next, the controller 8 calculates the lower limit of illumination for curing ink, based on measured results by the illumination measuring device 70, medium temperature measuring device 13, ambient temperature measuring device 71 and humidity measuring device 72, information transmitted from the input device 12, the resolution of an output image, and the table 81 in the storage section 80. In such a manner, the controller 8 calculates the lower limit of illumination for curing, based on measured results by the illumination measuring device 70, medium temperature measuring device 13, ambient temperature measuring device 71 and humidity measuring device 72, information transmitted from the input device 12, the resolution of an output image. Accordingly, an accurate lower limit of illumination for curing can be calculated regardless of changes in the temperatures, humidity and resolution. Further, since the controller 8 calculates the lower limit of illumination for curing ink, using the table 81, calculation of the lower limit of illumination for curing is easier than a case of calculating it, using mathematical expressions or the like.

Next, the controller 8 determines whether illuminations measured twice for the respective irradiation devices 4,4 are respectively higher than or equal to the lower limit of illumination for curing.

Then, when the respective illuminations are higher than or equal to the lower limit of illumination for curing, the controller 8 makes the recording heads 3a to 3d in a state that allows them to perform image recording. In such a manner, as shown in Fig. 6, the inkjet recording apparatus 1 turns into the state allowing image recording, earlier than a case of a prior art (refer to Fig. 7) where the recording heads 3a to 3d do not turn into the state allowing image recording until the illumination reaches the stable illumination.

On the other hand, when even one illumination is lower than the lower limit of illumination for curing, the carriage 2 and the illumination measuring device 70 collaborate with each other to repeat measuring illumination for the respective irradiation devices 4,4 until illuminations measured twice for the respective irradiation devices 4,4 respectively become higher than or equal to the lower limit of illumination for curing. Thus, it is prevented that, just after a start of lighting, the recording heads 3a to 3d turn into the state allowing image recording, with unstable illumination by the irradiation devices 4,4 higher than or equal to the lower limit of illumination for curing or with illumination by either irradiation device 4 lower than the lower limit of illumination for curing.

Now, operation of the inkjet recording apparatus 1 during image recording will be described.

First, while conveyance of a recording medium K by the conveying device 11 is stopped, the carriage 2 scans just above the recording medium K to one side in the scanning direction X. Thus, the recording heads 3a to 3d and irradiation devices 4,4 scan with the carriage 2, to record an image during this scanning. Specifically, the recording heads 3a to 3d jet ink, and the irradiation device 4 on the trailing side from the recording heads 3a to 3d, namely, on the other side, irradiates UV light onto the ink on the surface of the recording medium K. Herein, since the temperature controller 4c maintains the temperature of the metal cap section of the UV light source 4a at the temperature for the state of stable illumination, fluctuation in illumination is inhibited. And, as illumination by the irradiation devices 4,4 is higher or equal to the lower limit of illumination for curing ink, ink having landed on the recording medium K is securely cured by UV light and fixed to the surface of the recording medium K.

Next, in the state where conveying of the recording medium K by the conveying device 11 is stopped after the conveying device 11 has conveyed the recording medium K along the conveying direction Y, the carriage 2 scans just above the recording medium K in the scanning direction, and the recording heads 3a to 3d and the irradiation devices 4,4 perform image recording during this scanning.

Next, the conveying device 11 conveys the recording medium K in the conveying direction Y.

Thereafter, the inkjet recording apparatus 1 repeats the respective operations described above, thus sequentially recording desired images, formed of plural dots in respective process-colors, on the surface of the recording medium K.

Now, the operation of the inkjet recording apparatus 1 during maintenance of the recording heads will be described. The irradiation devices 4,4 are turned off during the following maintenance operations.

First, the carriage 2 moves to the maintenance area F.

Then, the cap members 61 rise and come into contact with the jetting faces 30 of the recording heads 3a to 3d. When the cap members 61 cover the jetting faces 30 of the recording heads 3a to 3d, the suction pump 62 is driven to suck ink from inside the ink jetting openings of the recording heads 3a to 3d together with foreign matters and dispose the ink into the waste ink tank 63. In such a manner, clogging of the ink jetting openings of the recording heads 3a to 3d is avoided.

Then, the cap members 61 move downward and the maintenance operation is terminated.

As has been described above, according to the inkjet recording apparatus 1 in accordance with the present embodiment, it is possible to turn the inkjet recording apparatus 1 into a state that allows image recording earlier than a case of a prior art, and thereby the efficiency of image recording is improved.

Further, since ink having landed on the recording medium K can be securely cured by light of illumination higher than the lower limit of illumination for curing ink, blurring of uncured ink can be prevented. Accordingly, deterioration in image quality can be prevented, compared with a case of a prior art.

Still further, in a case where the illuminations by the irradiation devices 4,4 are unstably higher than or equal to the lower limit of illumination for curing, or in a case where illumination by either irradiation device 4 is lower than the lower limit of illumination for curing, it is possible to prevent a start of image recording. Accordingly, the illuminations by lights irradiated onto ink on the recording medium K can be securely made higher than the lower limit for curing. Thus, it is possible to securely cure ink on the recording medium K.

Although in the present embodiment, it has been described that the controller 8 compares the illuminations by the irradiation devices 4,4 with the lower limit of illumination for curing at a start-up or at the time of termination of maintenance, the controller 8 may properly make the comparison also during image recording.

Further, although it has been described that the irradiation devices 4,4 are turned off during maintenance, the irradiation devices 4,4 may continue irradiation for a low illumination, and also may continue irradiation for the same illumination as that during image recording. Also in these cases, it is preferable that the recording heads 3a to 3d are turned into the state allowing image recording after the controller 8 confirms that illuminations by the irradiation devices 4,4 are higher than or equal to the lower limit for curing after maintenance.

Still further, although it has been described that the controller 8 turns the recording heads 3a to 3d into the state allowing image recording when illuminations measured by the illumination measuring device 70 are higher than or equal to the lower limit of illumination for curing, the controller 8 may turns the recording heads 3a to 3d into the state allowing ink jetting. In this case, for example, even during maintenance, jetting of ink can be controlled, depending on the measured illuminations.

Yet further, although it has been described that the humidity measuring device 72 measures the relative humidity, the humidity measuring device 72 may measure the absolute humidity. In this case, the table 81 stores the relationships between the lower limit of illumination for curing ink, and the kind of the recording medium K, temperature of the recording medium K, ambient temperature, absolute humidity and resolution of the output image.

Further, although it has been described that only a single illumination measuring device 70 is arranged beside the cap members 61, an illumination measuring device 70 may be arranged on each side of the cap members 61. In this case, the illumination measuring devices 70 preferably face the irradiation devices 4,4 when the recording heads 3a to 3d face the cap members 61. Thus, the carriage 2 does not need to reciprocally move to make the irradiation devices 4,4 face the illumination measuring devices 70, which allows simplification of the control of the carriage driving device 2a.

Still further, although it has been described that the metal section of each UV light source 4a is connected with the temperature controller 4c, the metal cap section may be connected with a power controller that controls the power to be applied to the metal cap section. It is preferable that this power controller maintains a power for the state of stable illumination when the irradiation devices 4 have reached the state of stable illumination, and applies a power, which is higher than the power for the state of stable illumination, to the metal cap section at a start of lighting of the irradiation devices 4 and at the time of switching to a higher illumination.

## Claims

1. An inkjet recording apparatus (1), comprising:
a recording head (3) that jets photo-curable ink onto a recording medium (K);
at least one irradiation device (4) that irradiates light onto ink having landed on a surface of the recording medium;
an illumination measuring device (70) that measures an illumination by light that is irradiated from the irradiation device; and
a controller (8) that controls the recording head,
**characterized in that** the controller controls the recording head to be in a state that allows the recording head to perform image recording, when two illuminations measured by the illumination measuring device at a predetermined time interval are respectively higher than or equal to the lower limit of illumination for curing.

2. The inkjet recording apparatus of Claim 1, comprising a plurality of said irradiation devices, wherein the controller controls the recording head to be in a state that allows the recording head to perform image recording, when two illuminations measured by the illumination measuring device at a predetermined time interval are respectively higher than or equal to the lower limit of illumination for curing, with respect to each of the irradiation devices.

3. The inkjet recording apparatus of claim 1 or 2, comprising at least one of:
an input device (12) via which an operator inputs a kind of a recording medium;
a first temperature measuring device (13) that measures a temperature of a recording medium;
a second temperature measuring device (71) that measures an ambient temperature;
a humidity measuring device (72) that measures a humidity; and
a calculating section (82) that calculates resolution of an output image,
wherein the controller calculates the lower limit of illumination for curing, based on at least one of the kind of a recording medium, temperature of the recording medium, ambient temperature, humidity and resolution of an output image.

4. The inkjet recording apparatus of claim 3, wherein the first temperature measuring device measures a temperature of a platen that supports the recording medium, for the temperature of the recording medium.

5. The inkjet recording apparatus of claim 3 or 4, comprising a storage section that stores a table indicating a relationship between the lower limit of illumination for curing and at least one of the kind of a recording medium, temperature of the recording medium, ambient temperature, humidity and resolution of an output image,
wherein the controller calculates the lower limit of illumination for curing, using the table.

6. The inkjet recording apparatus of any one of claims 1 to 5, wherein the recording head jets an ink of a cation-polymerization type.

7. The inkjet recording apparatus of claim 1, wherein the controller controls the recording head to be in a state that prohibits the recording head to perform image recording, when at least one of the two illuminations measured by the illumination measuring device is lower than the lower limit of illumination for curing ink.

8. The inkjet recording apparatus of claim 1, wherein when at least one of the two illuminations measured by the illumination measuring device is lower than the lower limit of illumination for curing ink, for a time longer than or equal to a predetermined time period, the controller performs an alarm function.

9. The inkjet recording apparatus of claim 1, wherein during when jetted ink is irradiated, the controller turns the recording head into a state that prohibits the recording head to perform image recording when at least one of the two illuminations measured by the illumination measuring device has become lower than the lower limit of illumination for curing ink, and performs an alarm function.

## Patentansprüche

1. Tintenstrahlaufzeichnungsvorrichtung (1) mit:
einem Aufzeichnungskopf (3), der eine lichtaushärtende Tinte auf ein Aufzeichnungsmedium (K) abzustrahlen;
zumindest einer Bestrahlungsvorrichtung (4), die Licht auf die auf einer Oberfläche des Aufzeichnungsmediums gelandete Tinte ausstrahlt;
einer Beleuchtungsmessvorrichtung (70), die eine Beleuchtung durch das von der Beleuchtungsvorrichtung ausgestrahlte Licht misst; und
einer Steuerung (8) zum Steuern des Aufzeichnungskopfs,
**dadurch gekennzeichnet, dass** die Steuerung den Aufzeichnungskopf so steuert, dass er in einem Zustand ist, der es dem Aufzeichnungskopf erlaubt, Bildaufzeichnungen durchzuführen, wenn zwei von der Beleuchtungsmessvorrichtung mit einem vorgegeben Zeitintervall gemessene Beleuchtungen jeweils größer oder gleich einem unteren Grenzwert der Beleuchtung zum Aushärten sind.

2. Tintenstrahlaufzeichnungsvorrichtung nach Anspruch 1, mit einer Mehrzahl von Bestrahlungsvorrichtungen, wobei die Steuerung den Aufzeichnungskopf steuert, so dass er in einem Zustand ist, der es dem Aufzeichnungskopf ermöglicht, Bildaufzeichnungen durchzuführen, wenn in Bezug auf jede der Beleuchtungsvorrichtungen zwei von der Beleuchtungsmessvorrichtung mit einem vorgegeben Zeitintervall gemessene Beleuchtungen jeweils größer oder gleich zu einem unteren Grenzwert der Beleuchtung zum Aushärten sind.

3. Tintenstrahlaufzeichnungsvorrichtung nach Anspruch 1 oder 2, mit zumindest einem von:
einer Eingabevorrichtung (12), über die ein Betreiber eine Art von Aufzeichnungsmedium eingeben kann;
einer ersten Temperaturmessvorrichtung (13), die eine Temperatur eines Aufzeichnungsmediums misst;
einer zweiten Temperaturmessvorrichtung (71), die eine Umgebungstemperatur misst;
einer Feuchtigkeitsmessvorrichtung (72), die eine Feuchtigkeit misst; und
einem Berechnungsabschnitt (82), der die Auflösung eines Ausgabebildes berechnet,
wobei die Steuerung den unteren Grenzwert der Beleuchtung zum Aushärten beruhend zumindest auf einem von der Art des Aufzeichnungsmediums, der Temperatur des Aufzeichnungsmediums, der Umgebungstemperatur, der Feuchtigkeit und der Auflösung eines Ausgabebildes berechnet.

4. Tintenstrahlaufzeichnungsvorrichtung nach Anspruch 3, bei der die erste Temperaturmessvorrichtung als die Temperatur des Aufzeichnungsmediums eine Temperatur eines Trägers misst, der das Aufzeichnungsmedium trägt.

5. Tintenstrahlaufzeichnungsvorrichtung nach Anspruch 3 oder 4, mit einem Speicherabschnitt, der eine Tabelle speichert, die eine Beziehung zwischen dem unteren Grenzwert der Beleuchtung zum Aushärten und zumindest einem von einer Art des Aufzeichnungsmediums, der Temperatur des Aufzeichnungsmediums, der Umgebungstemperatur, der Feuchtigkeit und der Auflösung eines Ausgabebildes angibt, wobei
die Steuerung den unteren Grenzwert der Beleuchtung zum Aushärten mittels der Tabelle berechnet.

6. Tintenstrahlaufzeichnungsvorrichtung nach einem der Ansprüche 1 bis 5, bei der Aufzeichnungskopf eine Tinte vom Kationenpolymerisationstyp ausstrahlt.

7. Tintenstrahlaufzeichnungsvorrichtung nach Anspruch 1, bei der die Steuerung den Aufzeichnungskopf steuert, um in einem Zustand zu sein, der es dem Aufzeichnungskopf verbietet, eine Bildaufzeichnung durchzuführen, wenn zumindest eine der zwei von der Beleuchtungsmessvorrichtung gemessenen Beleuchtungen niedriger als der untere Grenzwert der Beleuchtung zum Aushärten der Tinte ist.

8. Tintenstrahlaufzeichnungsvorrichtung nach Anspruch 1, bei der, wenn für eine Zeit länger als oder gleich einer vorgegebenen Zeitspanne zumindest eine der zwei von der Beleuchtungsmessvorrichtung gemessenen Beleuchtungen niedriger als der untere Grenzwert der Beleuchtung zum Aushärten der Tinte ist, die Steuerung eine Alarmfunktion ausführt.

9. Tintenstrahlaufzeichnungsvorrichtung nach Anspruch 1, bei der, in der Zeit, in der ausgestrahlte Tinte bestrahlt wird, die Steuerung den Aufzeichnungskopf in einem Zustand versetzt, der es dem Aufzeichnungskopf verbietet, eine Bildaufzeichnung durchzuführen, wenn zumindest eine der zwei von der Beleuchtungsmessvorrichtung gemessenen Beleuchtungen niedriger als der untere Grenzwert der Beleuchtung zum Aushärten von Tinte geworden ist, und eine Alarmfunktion durchführt.

## Revendications

1. Dispositif d'enregistrement à jet d'encre (1) comprenant :
une tête d'enregistrement (3) qui projette une encre séchant à la lumière sur un support d'enregistrement (K) ;
au moins un dispositif de rayonnement (4) qui fait rayonner une lumière sur l'encre ayant atterri sur une surface du support d'enregistrement ;
un dispositif de mesure d'éclairage (70) qui mesure un éclairage fourni par la lumière qui est émise par le dispositif de rayonnement ; et
un dispositif de commande (8) qui commande la tête d'enregistrement,
**caractérisé en ce que** le dispositif de commande commande la tête d'enregistrement pour qu'elle soit dans un état qui permet à la tête d'enregistrement de réaliser un enregistrement d'image, quand deux éclairages mesurés par le dispositif de mesure d'éclairage à un intervalle de temps prédéterminé sont respectivement supérieurs ou égaux à la limite inférieure d'éclairage pour le séchage.

2. Dispositif d'enregistrement à jet d'encre selon la revendication 1, comprenant une pluralité de dispositifs de rayonnement, dans lequel le dispositif de commande commande la tête d'enregistrement pour qu'elle soit dans un état qui permet à la tête d'enregistrement de réaliser un enregistrement d'image, quand deux éclairages mesurés par le dispositif de mesure d'éclairage à un intervalle de temps prédéterminé sont respectivement supérieurs ou égaux à la limite inférieure d'éclairage pour le séchage, par rapport à chacun des dispositifs de rayonnement.

3. Dispositif d'enregistrement à jet d'encre selon la revendication 1 ou 2, comprenant au moins un élément parmi :
un dispositif d'entrée (12) par lequel un opérateur saisit un type de support d'enregistrement ;
un premier dispositif de mesure de température (13) qui mesure une température d'un support d'enregistrement ;
un deuxième dispositif de mesure de température (71) qui mesure une température ambiante ;
un dispositif de mesure d'humidité (72) qui mesure une humidité ; et
une section de calcul (82) qui calcule la résolution d'une image de sortie,
dans lequel le dispositif de commande calcule la limite inférieure d'éclairage pour le séchage, en se basant sur au moins un paramètre parmi le type de support d'enregistrement, la température du support d'enregistrement, la température ambiante, l'humidité et la résolution d'une image de sortie.

4. Dispositif d'enregistrement à jet d'encre selon la revendication 3, dans lequel le premier dispositif de mesure de température mesure la température d'une platine qui supporte le support d'enregistrement, pour la température du support d'enregistrement.

5. Dispositif d'enregistrement à jet d'encre selon la revendication 3 ou 4, comprenant une section de stockage qui conserve un tableau indiquant la relation entre la limite inférieure d'éclairage pour le séchage et au moins un paramètre parmi le type de support d'enregistrement, la température du support d'enregistrement, la température ambiante, l'humidité et la résolution d'une image de sortie,
dans lequel le dispositif de commande calcule la limite inférieure d'éclairage pour le séchage, en utilisant le tableau.

6. Dispositif d'enregistrement à jet d'encre selon l'une quelconque des revendications 1 à 5, dans lequel la tête d'enregistrement projette une encre du type à polymérisation de cations.

7. Dispositif d'enregistrement à jet d'encre selon la revendication 1, dans lequel le dispositif de commande commande la tête d'enregistrement pour qu'elle soit dans un état qui empêche la tête d'enregistrement de réaliser un enregistrement d'image, quand au moins l'un des deux éclairages mesurés par le dispositif de mesure d'éclairage est inférieur à la limite inférieure d'éclairage pour le séchage de l'encre.

8. Dispositif d'enregistrement à jet d'encre selon la revendication 1, dans lequel, quand au moins l'un des deux éclairages mesurés par le dispositif de mesure d'éclairage est inférieur à la limite inférieure d'éclairage pour le séchage de l'encre, pendant une durée supérieure ou égale à un intervalle de temps prédéterminé, le dispositif de commande exécute une fonction d'alarme.

9. Dispositif d'enregistrement à jet d'encre selon la revendication 1, dans lequel, pendant l'éclairage de l'encre projeté, le dispositif de commande met la tête d'enregistrement dans un état qui empêche la tête d'enregistrement de réaliser un enregistrement d'image quand au moins l'un des deux éclairages mesurés par le dispositif de mesure d'éclairage est devenu inférieur à la limite inférieure d'éclairage pour le séchage de l'encre, et exécute une fonction d'alarme.
